# EUROPEAN PATENT APPLICATION

(11) **EP 4 607 131 A1**
(43) Date of publication of application: **27.08.2025**
(21) Application number: 23879535.5
(22) Date of filing: 21.09.2023
(51) Int. Cl.: F27B 7/24, F27D 7/06

(54) **ROTATING SEAL COOLING STRUCTURE, HEATING DEVICE, AND ROTATION SEAL COOLING METHOD**

(30) Priority: 20.10.2022 JP 2022168224
(71) Applicant: Tsukishima Kikai Co., Ltd., Tokyo 104-0053 (JP)
(72) Inventor: WATANABE Kenji, Tokyo 104-0053 (JP); SATO Sumito, Tokyo 104-0053 (JP); TAKAHASHI Hiroki, Tokyo 104-0053 (JP); IMAMURA Takuya, Tokyo 104-0053 (JP)
(74) Representative: Müller-Boré & Partner Patentanwälte PartG mbB
(86) International application number: PCT/JP2023/034326
(87) International publication number: WO 2024/084887

(57) **Abstract**

A rotation seal-cooling structure (S, S', S") includes a cylindrical body (100) including a double structure portion (D, D', D") having a space open to the outside in a direction toward one end side from the other end side on an outer peripheral edge portion of the one end side and configured to rotate around a rotation axis (L), a rotation seal (5) including a sliding surface (15) coming into contact with the double structure portion (D, D', D") from the outer side of the cylindrical body (100) in a radial direction and configured to rotatably seal a portion between the cylindrical body (100) and the sliding surface (15), and a nozzle (1) configured to inject a cooling fluid to the double structure portion (D, D', D").

## Description

### TECHNICAL FIELD

The present invention relates to a rotation seal-cooling structure, a heating device, and a rotation seal-cooling method.

Priority is claimed on Japanese Patent Application No. 2022-168224, filed on October 20, 2022, the content of which is incorporated herein by reference.

### BACKGROUND ART

A rotary-type heating device is known that heats an object to be treated while moving the object to be treated from one end toward the other end of a cylindrical body by feeding the object to be treated into the cylindrical body that is being rotated around a central axis slightly inclined from a horizontal axis, such as a rotary kiln and a steam tube dryer (Patent Document 1).

In a rotation seal that rotatably seals a high-temperature portion of the rotary-type heating device, a technology is known in which a contact surface (sliding surface) on a high-temperature side of the rotation seal that is in contact with the rotating rotary-type heating device is formed as a double structure (a sealed jacket structure or the like) and a cooling medium such as water or air is allowed to circulate through the double structure (Patent Document 2, Patent Document 3) in order to protect the rotation seal from the heat.

Such a contact surface of the rotation seal on the high-temperature side is a portion raised to a high temperature due to being in contact with the rotating high-temperature cylindrical body. Therefore, it is necessary to set the temperature of the portion to be equal to or lower than a heat resistance temperature (for example, 150°C) of a sealing material of the rotation seal. In a method of the related art in which the contact surface of the rotation seal on the high-temperature side is formed as a double structure (a sealed jacket structure or the like) and cooling is performed by allowing the cooling medium such as water or air to circulate through a contact surface with a rotation seal on a fixed side with respect to the rotating cylindrical body, there is a case where the rotation seal cannot be sufficiently effectively cooled. Cooling a rotation side by the method in the related art such as with a sealed jacket structure for cooling the rotation seal on the fixed side requires a complicated structure and is difficult to realize.

### Citation List

### Patent Documents

Patent Document 1: Japanese Unexamined Patent Application, First Publication No. 2003-287369
Patent Document 2: Japanese Patent No. 3862219
Patent Document 3: Japanese Unexamined Patent Application, First Publication No. 2003-190770

### SUMMARY OF INVENTION

### Technical Problem

The present invention has been made under such a background, and an object thereof is to provide a rotation seal-cooling structure, a heating device, and a rotation seal-cooling method capable of cooling a sliding surface of a rotation seal on a rotation side with a simple structure.

### Solution to Problem

In order to achieve such an object by solving the problems described above, the present invention proposes the following means.

A first aspect of the present invention is a rotation seal-cooling structure, including a cylindrical body including a double structure portion having a space open to the outside in a direction toward one end side from the other end side, on an outer peripheral edge portion of the one end side, and configured to rotate around a rotation axis, a rotation seal including a sliding surface coming into contact with the double structure portion from the outer side of the cylindrical body in a radial direction and configured to rotatably seal a portion between the cylindrical body and the sliding surface, and a nozzle configured to inject a cooling fluid to the double structure portion.

According to the first aspect of the present invention, the double structure portion provided at the outer peripheral edge portion of the cylindrical body can be cooled with the cooling fluid, and thus the sliding surface of the rotation seal that comes into contact with the double structure portion can be cooled from the inner side in the radial direction. Therefore, the rotation seal can be cooled with a simple structure, the life of the rotation seal can be extended, and the frequency of seal replacement can be reduced.

A second aspect of the present invention is the rotation seal-cooling structure according to the first aspect in which the double structure portion is configured to guide the cooling fluid from the outer side in the radial direction toward the inner side in the radial direction.

According to the second aspect of the present invention, since the cooling fluid flows from the outer side in the radial direction toward the inner side in the radial direction inside the double structure portion, a cooling effect of the sliding surface of the rotation seal in contact with the double structure portion can be enhanced.

A third aspect of the present invention is the rotation seal-cooling structure according to any one of the first to third aspects, in which a plurality of the nozzles are provided along a circumferential direction of the cylindrical body.

According to the third aspect of the present invention, even in a case where a rotation seal having a large diameter is used, the rotation seal can be uniformly cooled in the circumferential direction.

A fourth aspect of the present invention is the rotation seal-cooling structure according to any one of the first to third aspects, in which the cooling fluid is water, air, or a mixture of water and air.

According to the fourth aspect of the present invention, it is possible to increase a cooling effect of the sliding surface of the rotation seal while eliminating a possibility that the cooling fluid discharged from the rotation seal-cooling structure pollutes the global environment.

A fifth aspect of the present invention is the rotation seal-cooling structure according to the fourth aspect, in which the nozzle is a spray nozzle.

According to the fifth aspect of the present invention, the cooling fluid is sprayed in the form of mist, and a high cooling effect can be obtained.

A sixth aspect of the present invention is the rotation seal-cooling structure according to any one of the first to fifth aspects, in which a plurality of flow passage walls that extend in the radial direction inside the double structure portion and partition the inside of the double structure portion in a circumferential direction of the cylindrical body are provided in the circumferential direction.

According to the sixth aspect of the present invention, the cooling fluid can uniformly flow in the double structure portion, and the sliding surface of the rotation seal can be uniformly cooled in the circumferential direction.

A seventh aspect of the present invention is the rotation seal-cooling structure according to any one of the first to sixth aspects, in which a plurality of fins that extend in a direction inclined with respect to the rotation axis are provided inside the double structure portion in a circumferential direction of the cylindrical body.

According to the seventh aspect of the present invention, a contact area with the cooling fluid can be increased, and a cooling efficiency of the sliding surface of the rotation seal can be increased.

An eighth aspect of the present invention is a heating device including the rotation seal-cooling structure according to any one of the first to seventh aspects, in which the heating device heats an object to be treated that is fed into the cylindrical body.

According to the eighth aspect of the present invention, it is possible to provide a heating device in which the life of the rotation seal is extended and the frequency of seal replacement is reduced.

A ninth aspect of the present invention is a rotation seal-cooling method, including: by using a rotation seal-cooling structure including a cylindrical body including a double structure portion having a space open to the outside in a direction toward one end side from the other end side, on an outer peripheral edge portion, and configured to rotate around a rotation axis, a rotation seal including a sliding surface coming into contact with the double structure portion from the outer side of the cylindrical body in a radial direction and configured to rotatably seal a portion between the cylindrical body and the sliding surface, and a nozzle configured to inject a cooling fluid to the double structure portion, injecting the cooling fluid from the nozzle to the double structure portion.

According to the ninth aspect of the present invention, the outer peripheral edge portion of the cylindrical body can be cooled with the cooling fluid, and thus the sliding surface of the rotation seal can be cooled from the inner side in the radial direction. Therefore, the rotation seal can be cooled with a simple structure, the life of the rotation seal can be extended, and the frequency of seal replacement can be reduced.

A tenth aspect of the present invention is the rotation seal-cooling method according to the ninth aspect, further including guiding the injected cooling fluid from the outer side in the radial direction toward the inner side in the radial direction inside the double structure portion.

According to the tenth aspect of the present invention, since the cooling fluid flows from the outer side in the radial direction toward the inner side in the radial direction inside the double structure portion, a cooling effect of the sliding surface of the rotation seal in contact with the double structure portion can be enhanced. Advantageous Effects of Invention

According to the present invention, it is possible to provide a rotation seal-cooling structure, a heating device, and a rotation seal-cooling method capable of cooling a sliding surface of a rotation seal on a rotation side with a simple structure.

### BRIEF DESCRIPTION OF DRAWINGS

[FIG. 1] A schematic perspective view of a rotation seal-cooling structure of a first embodiment according to the present invention.
[FIG. 2] A main part schematic perspective view of the rotation seal-cooling structure of the first embodiment according to the present invention.
[FIG. 3] A main part perspective cross-sectional view of the rotation seal-cooling structure of the first embodiment according to the present invention.
[FIG. 4] A conceptual view of a rotation seal-cooling structure according to the present invention.
[FIG. 5] A conceptual view of a rotation seal-cooling structure of a technology in the related art.
[FIG. 6] A main part perspective cross-sectional view of a rotation seal-cooling structure of a modification example of the first embodiment according to the present invention.
[FIG. 7] A main part perspective cross-sectional view of the rotation seal-cooling structure of a modification example of the first embodiment according to the present invention.

### DESCRIPTION OF EMBODIMENTS

Hereinafter, a rotation seal-cooling structure S1 according to a first embodiment of the present invention will be described with reference to the drawings.

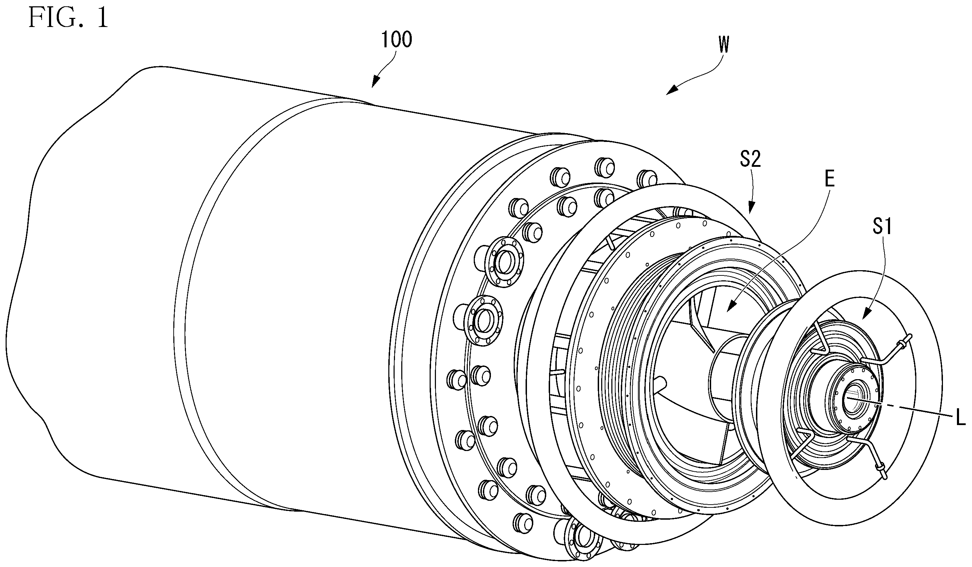

FIG. 1 is a schematic perspective view of a heating device W including the rotation seal-cooling structure S1 according to the first embodiment of the present invention. More specifically, FIG. 1 shows the heating device W including the rotation seal-cooling structure S1, a rotation seal-cooling structure S2 having the same structure as that of the rotation seal-cooling structure S1 and having a larger outer diameter, and a rotatable cylindrical body 100.

The heating device W heats an object to be treated, which is fed into the cylindrical body 100 from a feed inlet (not shown), with a heat source such as a heat transfer pipe provided inside the cylindrical body 100, and moves the object to be treated to one end side to the other end side of the cylindrical body 100 while rotating the cylindrical body 100. Here, a rotation axis L of the cylindrical body 100 is provided to be inclined with respect to a horizontal plane such that the one end side (right side in FIG. 1) of the cylindrical body 100 is set to be a lower side with respect to the other end side of the cylindrical body 100. Therefore, the object to be treated fed into the other end side (left side in FIG. 1) of the cylindrical body 100 moves to the one end side (right side in FIG. 1) of the cylindrical body 100 inside the rotating cylindrical body 100 and is discharged to the outside from an outlet E provided on the one end side of the cylindrical body 100. Here, in FIGS. 1, 2, and 3, the right side is denoted as one end side of the rotation axis L, and the left side is denoted as the other end side of the rotation axis L.

In the first embodiment of the present invention, since the rotation seal-cooling structure S1 and the rotation seal-cooling structure S2 differ only in outer diameter, in the following description, the structure of the rotation seal-cooling structure S1 will be described as representative.

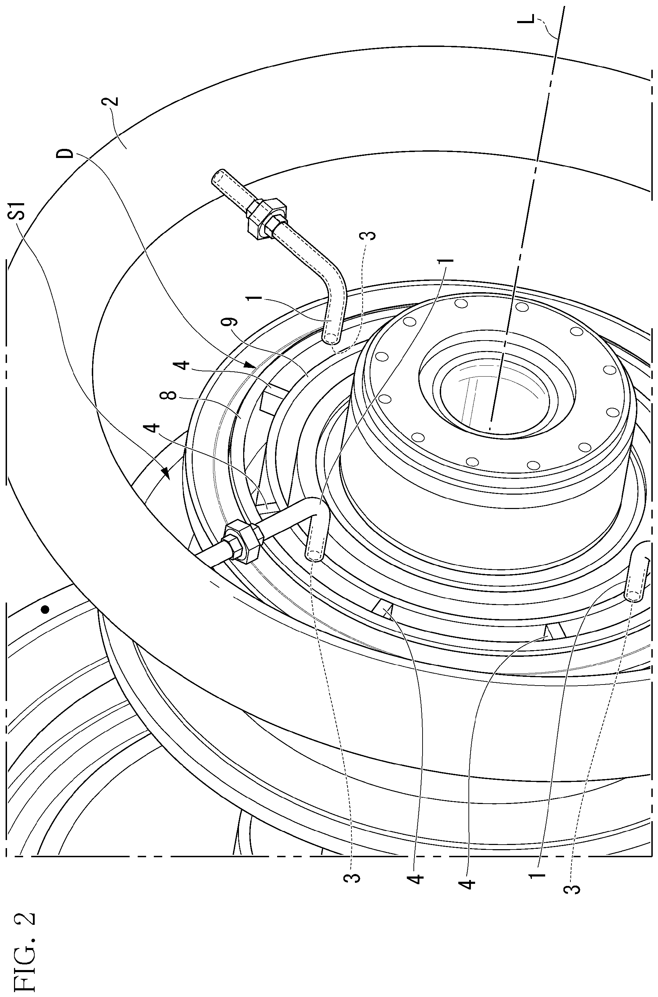

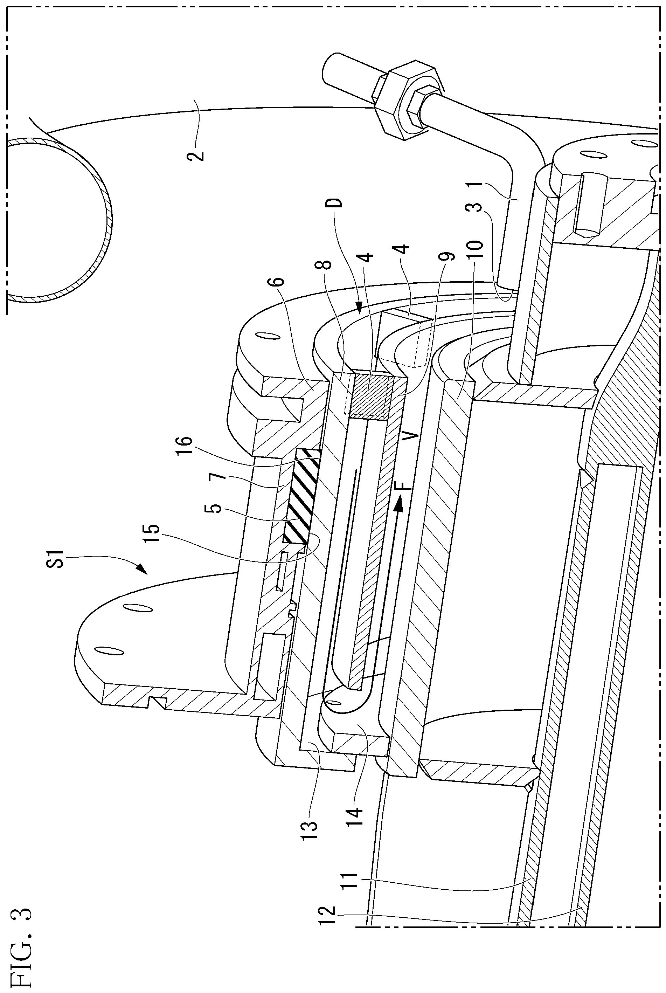

FIG. 2 is a main part schematic perspective view of the rotation seal-cooling structure S1 of the first embodiment according to the present invention. FIG. 3 is a main part perspective cross-sectional view of the rotation seal-cooling structure S1 of the first embodiment according to the present invention.

The rotation seal-cooling structure S1 includes a double structure portion D that is one end side of the rotation axis L of the rotatable cylindrical body 100 and is provided on an outer peripheral edge portion of the cylindrical body 100, a rotation seal 5 including a sliding surface 15 coming into contact with the double structure portion D from an outer side in a radial direction of the cylindrical body 100 and rotatably sealing a portion between the cylindrical body 100 and the sliding surface 15 in an airtight manner, and a nozzle 1 that injects a cooling fluid to the double structure portion D. Here, the radial direction of the cylindrical body 100 is a direction perpendicular to the rotation axis L of the cylindrical body 100, that is, a direction in which a radius of the cylindrical body 100 extends from the rotation axis L of the cylindrical body 100. In the following description, the radial direction of the cylindrical body 100 may be simply referred to as a radial direction.

The cylindrical body 100 is a cylindrical member rotatable about a central axis L, which is slightly inclined from a ground surface. The cylindrical body 100 is formed of a metal. In addition, a heat source, such as a heat transfer pipe (not shown), is provided in the cylindrical body 100, which is heated to a high temperature by supplying a heat medium from a heat medium supply source (not shown). As the heat medium, hot water, steam, heat medium oil, or the like is used.

The double structure portion D having a space V that is open to the outside toward one end side of the rotation axis L is provided on an outer peripheral edge portion of the cylindrical body 100 on the one end side of the rotation axis L. In other words, the double structure portion D having the space V that is open to the outside in a direction toward the one end side from the other end side is provided on the outer peripheral edge portion of the cylindrical body 100 on the one end side in an axial direction of the rotation axis L. In FIG. 3, the space V is present between a first cylindrical wall 10 and a second cylindrical wall 8 provided on the outer side in the radial direction with respect to the first cylindrical wall 10. The space V is partitioned into the outer side in the radial direction (in FIG. 3, an upper side, and hereinafter, may be referred to as the upper side) and the inner side in the radial direction (in FIG. 3, a lower side, and hereinafter, may be referred to as the lower side) by a cylindrical partition wall 9 supported by a plurality of supports 4 extending toward the inner side in the radial direction from the second cylindrical wall 8. Since the cylindrical partition wall 9 is not connected to a first other end side wall 13 and a second other end side wall 14 on a most other end side of the space V, the outer side and the inner side of the space V in the radial direction are connected at the other end side of the space V. Therefore, a fluid can move between the outer side and the inner side of the space V in the radial direction. That is, the space V includes a first space located between the second cylindrical wall 8 and the cylindrical partition wall 9, and a second space located between the cylindrical partition wall 9 and the first cylindrical wall 10 and located on the inner side in the radial direction of the first space, and the first and second spaces are each open on one end side thereof toward the outside in the axial direction and communicate with each other on the other end side thereof. The space V may be formed of three or more spaces formed by a plurality of cylindrical walls disposed coaxially. In this case, for example, the three or more spaces may each be open toward the outside in the axial direction on one end side thereof and may communicate with each other on the other end side. In addition, a plurality of double structure portions having a space that is open to the outside in a direction toward the one end side from the other end side may be provided at the outer peripheral edge portion of the one end side of the cylindrical body 100 in the axial direction. In this case, one double structure portion may be disposed to surround another double structure portion from the outer side in the radial direction.

The rotation seal 5 including the sliding surface 15 is provided on the outer side of the double structure portion D in the radial direction, and the rotation seal 5 rotatably seals a portion between the outer side of the double structure portion D in the radial direction and the sliding surface 15. The heating device W is provided with a base (not shown) that rotatably supports a plurality of portions of the cylindrical body 100 in the length direction thereof from below.

The rotation seal 5 is a known sealing member such as a V packing (V ring) and is formed of, for example, an elastic member such as a rubber material. The rotation seal 5 is sandwiched in the radial direction by an outermost peripheral surface 16 of the double structure portion D of the cylindrical body 100, which is in contact with the sliding surface 15 on the inner side in the radial direction, and a second sealing fixed cylindrical wall 7 on the outer side in the radial direction, and is fixed in the direction of the rotation axis L (that is, the axial direction) by a first sealing fixed cylindrical wall 6. In other words, the rotation seal 5 seals a portion between the outermost peripheral surface 16 and the second sealing fixed cylindrical wall 7. The rotation seal 5 is formed in an annular shape around the rotation axis L.

The nozzle 1 injects, from an opening 3 toward the open space V of the double structure portion D, the cooling fluid supplied through a cooling fluid supply pipe line 2. As shown in FIG. 2, the opening 3 of the nozzle 1 is open toward the open space V of the double structure portion D. More specifically, the opening 3 of the nozzle 1 injects the cooling fluid to the upper side of the space V partitioned by the cylindrical partition wall 9. That is, the opening 3 of the nozzle 1 faces the first space of the space V in the axial direction. The cooling fluid injected to the upper side of the space V travels toward the other end side of the rotation axis L along a trajectory indicated by an arrow F in FIG. 3, collides with the first other end side wall 13 and the second other end side wall 14 to change a traveling direction thereof to the inner side in the radial direction, moves to the lower side of the space V, further travels to the one end side of the rotation axis L on the lower side of the space V and is discharged to the outside.

A plurality of (two or more) nozzles 1 are provided in a circumferential direction of the cylindrical body 100. Therefore, the cooling fluid can flow to the double structure portion D uniformly in the circumferential direction of the cylindrical body 100. Further, by providing the plurality of nozzles 1 in the circumferential direction, even in a case where the rotation seal 5 having a large diameter is used, the rotation seal can be uniformly cooled in the circumferential direction. Here, the circumferential direction of the cylindrical body 100 is a direction in which the cylindrical body 100 revolves around the rotation axis L, that is, a direction in which a tangent line of the cylindrical body 100 extends. In other words, the circumferential direction of the cylindrical body 100 is around the rotation axis L. In the following description, the circumferential direction of the cylindrical body 100 may be simply referred to as a circumferential direction.

Here, since a heat source, such as a heat transfer pipe (not shown), is provided on the inner side of the cylindrical body 100 in the radial direction, the cylindrical body 100 has a higher temperature toward the inner side in the radial direction. Therefore, the cooling fluid is injected from the nozzle 1 and flows into the double structure portion D, so that the double structure portion D and the cooling fluid come into contact with each other. The double structure portion D and the cooling fluid are in contact with each other, so that the heat is transferred from the double structure portion D on a high-temperature side to the cooling fluid on a low-temperature side by heat exchange. Therefore, the sealing member of the rotation seal 5 in which the sliding surface 15 is in contact with the double structure portion D from the outer side in the radial direction can be cooled. As a result, it is possible to prevent deterioration of the sealing member due to heat and the associated shortening of the life of the rotation seal 5.

Here, the cooling fluid is injected to the upper side of the space V, and this is because a cooling effect of the rotation seal 5 is enhanced by bringing the cooling fluid, which has not yet received sufficient heat from the double structure portion D on the high-temperature side, into contact with the rotation seal 5 that is a target to be cooled. Therefore, since the double structure portion D is configured to guide the cooling fluid from the outer side in the radial direction toward the inner side in the radial direction, the cooling effect of the rotation seal 5 can be enhanced.

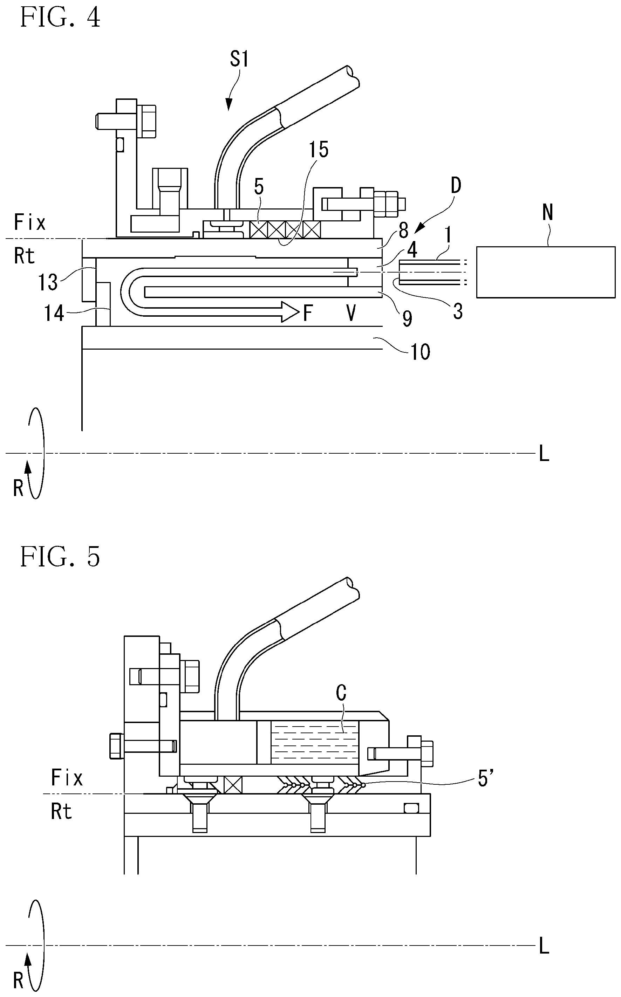

FIG. 4 is a conceptual view of the rotation seal-cooling structure S1 according to the first embodiment of the present invention. FIG. 5 is a conceptual view of a rotation seal-cooling structure of a technology in the related art. In the technology of the related art, a rotation seal 5' was cooled from the outer side in the radial direction by allowing cooling water C to circulate to the outer side of the rotation seal 5' in the radial direction. On the other hand, in the rotation seal-cooling structure S1 according to the first embodiment of the present invention, the rotation seal 5 can be cooled from the inner side in the radial direction. FIGS. 4 and 5 show that the inner side in the radial direction with respect to a reference numeral Rt shown therein is rotated in a rotation direction R, and the outer side in the radial direction with respect to a reference numeral Fix is a fixed portion. Therefore, the inner side of the rotation seal 5 in the radial direction in FIG. 4 is the sliding surface 15 of the rotation seal 5. In the sliding surface 15, since the double structure portion D of the cylindrical body 100 having a high temperature comes into contact with the rotation seal 5, the sliding surface 15 on the inner side of the rotation seal 5 in the radial direction has the highest temperature. Therefore, as in the case of the rotation seal-cooling structure S1 of the present embodiment, the rotation seal 5 can be most effectively cooled by cooling the rotation seal 5 from the inner side in the radial direction. Further, in the rotation seal-cooling structure S1 of the present embodiment, the rotation seal 5 can be cooled by a simple structure in which the cooling fluid is injected into the double structure portion D having the space V that is open to the outside toward the one end side of the rotation axis of the rotating cylindrical body 100. As a result, the life of the rotation seal 5 can be extended, and the frequency of seal replacement can be reduced. On the other hand, in the technology of the related art, since the rotation seal 5' is cooled from the outer side in the radial direction, it is not possible to effectively cool the sliding surface on the inner side in the radial direction of the rotation seal 5' having the highest temperature.

Here, the cooling fluid used in the present embodiment is air, water, or a mixture of air and water. Compared with a case where only air is used as the cooling fluid, in a case where water or a mixture of air and water is used, in addition to the heat exchange from the double structure portion D of the cylindrical body 100 having a high temperature to the cooling fluid, cooling due to the latent heat of evaporation of water can be performed to further efficiently cool the rotation seal 5. Water, which is a cooling fluid, or a mixture of air and water may be injected in the form of mist using a spray nozzle for the nozzle 1. By spraying the cooling fluid in the form of mist, a high cooling effect can be obtained. In this case, the nozzle 1 may be a nozzle of a two-fluid nozzle N shown in FIG. 4.

More specifically, in a case where the temperature of the heat source is 250°C, the temperature of the sliding surface 15 can be set to approximately 85°C to 110°C by injecting compressed air at normal temperature as the cooling fluid at an air volume of approximately 60 Nm³. On the other hand, in a case where the temperature of the heat source is 250°C, the temperature of the sliding surface 15 can be set to approximately 90°C to 110°C by using the two-fluid nozzle N and injecting compressed air as the cooling fluid at an air volume of approximately 5 Nm³/h and injecting water at approximately 5 L/h. That is, compared with a case where only the compressed air is used as the cooling fluid, in a case where the compressed air and the water are used as the cooling fluid, a cooling effect equivalent to that in a case where only a compressed fluid is used as the cooling fluid can be obtained with a smaller amount of injected cooling fluid. Here, the amount of water to be injected is preferably such that all the injected water is vaporized inside the double structure portion D.

In a case where the compressed air is injected as the cooling fluid at an air volume of approximately 60 Nm³/h using the rotation seal-cooling structure S1 according to the first embodiment as described above, the temperature of the sliding surface 15 can be set to approximately 100°C in a case where the temperature of the heat source is 250°C. On the other hand, in a case where the cooling fluid is not injected using the rotation seal-cooling structure S1 according to the first embodiment, the temperature of the sliding surface 15 is approximately 140°C in a case where the temperature of the heat source is 250°C.

Therefore, by using the rotation seal-cooling structure S1 according to the first embodiment, the sliding surface 15 can be effectively cooled, and the sealing material can be sufficiently cooled to a heat resistance temperature thereof (for example, 150°C or lower). Accordingly, the rotation seal 5 can be cooled with a simple structure, the life of the rotation seal 5 can be extended, and the frequency of seal replacement can be reduced.

### <First Modification Example of First Embodiment>

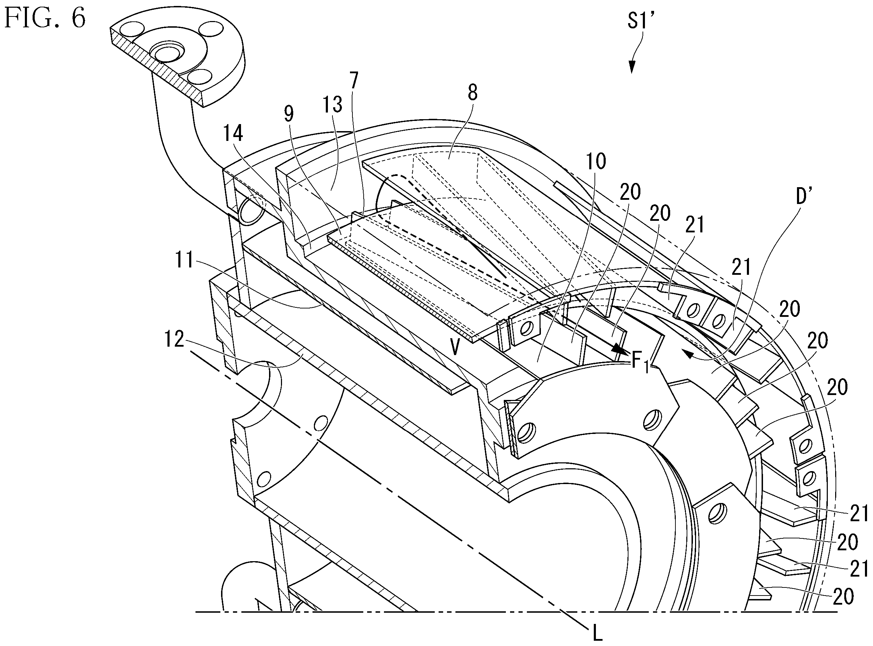

FIG. 6 is a main part perspective cross-sectional view of a rotation seal-cooling structure S1' of a first modification example of the first embodiment according to the present invention. The same structures as those in the first embodiment are denoted by common reference numerals, and the description thereof will be omitted. Only the points different from the first embodiment will be described. In FIG. 6, only a rotation side where a double structure portion D' is provided is shown, and the rotation seal 5 on a fixed side is not shown.

In the rotation seal-cooling structure S1', fins 21 extending in the radial direction on the upper side of the space V and fins 20 extending in the radial direction on the lower side of the space V are provided. In the double structure portion D' including the fins 20 and 21, the cooling fluid injected into the double structure portion D' flows from one end side toward the other end side of the rotation axis between the fins 21 in a direction indicated by an arrow F1, and then the cooling fluid collides with the first other end side wall 13 and the second other end side wall 14 to change the traveling direction thereof to the inner side in the radial direction, moves to the lower side of the space V, further travels to the one end side of the rotation axis L in the direction indicated by the arrow F1 on the lower side of the space V, and is discharged to the outside. The fin 21 is connected to the second cylindrical wall 8, and the fin 20 is connected to the first cylindrical wall 10. The fin 21 may be connected to the second cylindrical wall 8 and the cylindrical partition wall 9, or the fin 20 may be connected to the cylindrical partition wall 9 and the first cylindrical wall 10.

By providing the fins 20 and 21, the surface area of the double structure portion D' in contact with the cooling fluid increases. Therefore, the contact area between the cooling fluid and the double structure portion D can be increased. Therefore, the heat exchange between the cooling fluid and the double structure portion D can be efficiently performed, and the cooling of the rotation seal 5 can be efficiently performed.

Here, the fins 20 and 21 are provided to be inclined with respect to the rotation axis L. Therefore, the length of the fins can be increased compared with a case where there is no inclination angle, and the surface area of the fins 20 and 21 can be further increased. In the rotation seal-cooling structure S1', the contact area between the cooling fluid and the double structure portion D can be further increased, and thus the heat exchange between the cooling fluid and the double structure portion D can be further efficiently performed, and the cooling of the rotation seal 5 can be further efficiently performed.

The second cylindrical wall 8 provided with the fin 21 and the first cylindrical wall 10 provided with the fin 20 may be divided into a plurality of parts in the circumferential direction. In such a case, assembly and disassembly of the double structure portion D' are facilitated.

Here, in the first modification example, inclination directions of the fins 20 and 21 with respect to the rotation axis L are different from each other to intersect each other. Therefore, at one end side with respect to the cylindrical partition wall 9 provided at a boundary between the fin 20 and the fin 21, the cooling fluid flowing between the fins 20 and the cooling fluid flowing between the fins 21 intersect with each other, and thus the flow is disturbed and turbulence is generated. By generating turbulence, the heat exchange between the cooling fluid and the double structure portion D can be further efficiently performed, and the cooling of the rotation seal 5 can be further efficiently performed.

Even in a case where the rotation seal-cooling structure S1' of the first modification example of the first embodiment is used, the same effect as that of the rotation seal-cooling structure S1 of the first embodiment can be obtained.

### <Second Modification Example of First Embodiment>

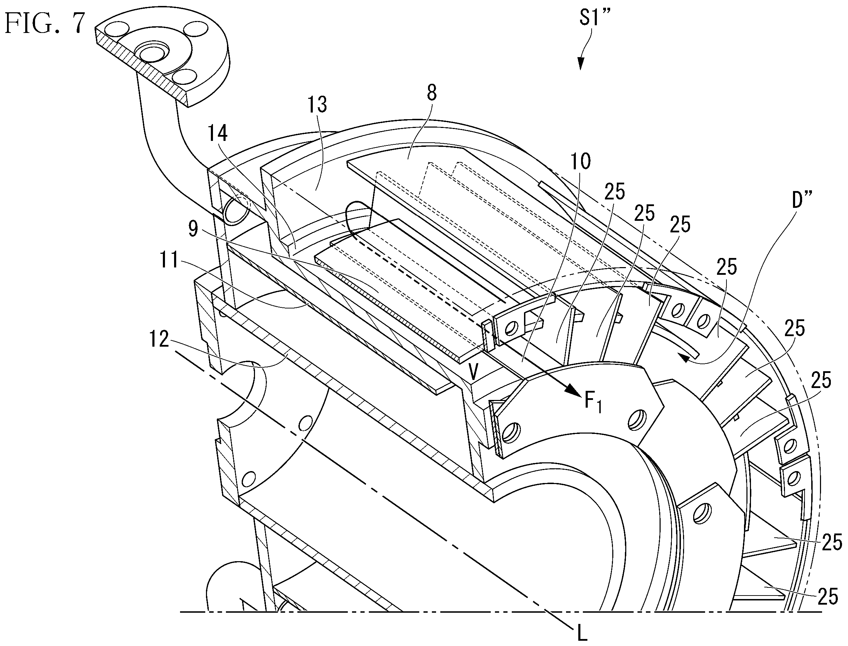

FIG. 7 is a main part perspective cross-sectional view of a rotation seal-cooling structure S1" of a second modification example of the first embodiment according to the present invention. The same structures as those in the first embodiment are denoted by common reference numerals, and the description thereof will be omitted. Only the points different from the first embodiment will be described. In FIG. 7, as in FIG. 6, only the rotation side where the double structure portion D" is provided is shown, and the rotation seal 5 on the fixed side is not shown.

In the rotation seal-cooling structure S", flow passage walls 25 extending in the radial direction on the upper side and the lower side of the space V and partitioning the space V in the circumferential direction are provided. The flow passage wall 25 extends in both the radial direction and the axial direction and is provided between the second cylindrical wall 8 and the first cylindrical wall 10, and the cylindrical partition wall 9 penetrates the flow passage wall 25. According to such a structure, the cooling fluid injected into the double structure portion D" can be uniformly distributed in the circumferential direction and can uniformly flow in the circumferential direction. In this case, as indicated by the arrow F1 in FIG. 7, the flow of the cooling fluid flows from one end side toward the other end side of the rotation axis between the flow passage walls 25 on the upper side of the space V in a direction indicated by the arrow F1. Thereafter, the cooling fluid collides with the first other end side wall 13 and the second other end side wall 14 to change the traveling direction thereof to the inner side in the radial direction, moves to the lower side of the space V, further travels between the flow passage walls 25 on the lower side of the space V to one end side of the rotation axis L, and is discharged to the outside.

According to such a structure, since the cooling fluid can uniformly flow in the circumferential direction, heat exchange between the cooling fluid and the double structure portion D" can be more efficiently performed, and the rotation seal 5 can be efficiently cooled.

Even in a case where the rotation seal-cooling structure S1" of the second modification example of the first embodiment is used, the same effect as that of the rotation seal-cooling structure S1 of the first embodiment can be obtained.

Here, the rotation seal-cooling structure S according to the first embodiment, the rotation seal-cooling structure S' according to the first modification example of the first embodiment, and the rotation seal-cooling structure S" according to the second modification example of the first embodiment can be regarded as a rotation seal-cooling method using the rotation seal-cooling structures S, S', and S" including the cylindrical body 100 including the double structure portions D', D", and D‴ having the space V open to the outside toward one end side of the rotation axis L, on an outer peripheral edge portion, and configured to rotate around the rotation axis L, the rotation seal 5 including the sliding surface 15 coming into contact with the double structure portions D', D", and D‴ of the cylindrical body 100 from the outer side of the cylindrical body 100 in the radial direction and configured to rotatably seal a portion between the cylindrical body 100 and the sliding surface 15, and the nozzle 1 that injects the cooling fluid to the double structure portions D, D', and D", in which the cooling fluid is injected from the nozzle 1 to the double structure portion D. According to such a rotation seal-cooling method, the same effects as those of the rotation seal-cooling structures S, S', and S" can be obtained.

Furthermore, the method can be regarded as a rotation seal-cooling method for guiding the cooling fluid from the outer side in the radial direction toward the inner side in the radial direction in the double structure portions D, D', and D". According to such a rotation seal-cooling method, the same effects as those of the rotation seal-cooling structures S, S', and S" can be obtained.

The first embodiment and the first modification example and the second modification example of the first embodiment according to the present invention have been described above with reference to the drawings, but the present invention is not limited to the above-described embodiment and modification examples. The various shapes and combinations of configuration members represented in the above-described embodiment and modification examples are merely examples, and can be changed in various ways, based on design requirements within the scope of the present invention.

In the first modification example of the first embodiment, the inclination directions of the fins 20 and 21 with respect to the rotation axis L are different from each other, but the inclination directions may be the same. In addition, although the fin 20 and the fin 21 are spaced apart from each other in the radial direction, the fin 20 and the fin 21 may be provided as one flow passage wall extending in the radial direction with no gap, without being spaced apart from each other in the radial direction.

In the second modification example of the first embodiment, the flow passage wall 25 extending in the radial direction on the upper side of the space V and partitioning the upper side of the space V in the circumferential direction is provided, but the flow passage wall 25 may be spaced apart in the radial direction as in the fins 20 and 21 of the first modification example of the first embodiment. In addition, in a case where the flow passage wall 25 is provided, the flow passage wall 25 also functions as a fin. Therefore, in addition to the effect in which the flow passage wall 25 allows the cooling fluid to flow uniformly in the circumferential direction, the contact area between the cooling fluid and the double structure portion D" can be increased by the flow passage wall 25 increasing the surface area of the double structure portion D". Therefore, the heat exchange between the cooling fluid and the double structure portion D" can be more efficiently performed, and the rotation seal 5 can be efficiently cooled.

In the first modification example and the second modification example of the first embodiment, the fins 20 and 21 or the flow passage wall 25 are provided on both the upper side and the lower side of the space V. However, the fins 20 and 21 or the flow passage wall 25 may be provided on either one of the upper side or the lower side of the space V. In addition, the fins 20 and 21 and the flow passage wall 25 may be provided in combination on the upper side or the lower side of the space V or on the upper side and the lower side of the space V. Specifically, the fin 20 or 21 may be provided on the upper side of the space V, and the flow passage wall 25 may be provided on the lower side of the space V. Alternatively, the flow passage wall 25 may be provided on the upper side of the space V, and the fins 20 or 21 may be provided on the lower side of the space V. Further, the fins 20 or 21 and the flow passage wall 25 may be provided in combination or alternately in the circumferential direction on the upper side or the lower side of the space V, or on both the upper side and the lower side of the space V.

### REFERENCE SIGNS LIST

1 Nozzle
2 Cooling fluid supply pipe line
3 Opening
4 Support
5 Rotation seal
6 First sealing fixed cylindrical wall
7 Second sealing fixed cylindrical wall
8 Second cylindrical wall
9 Cylindrical partition wall
10 First cylindrical wall
15 Sliding surface
100 Cylindrical body
D, D', D" Double structure portion
L Rotation axis
S, S', S" Rotation seal-cooling structure
W Heating device

## Claims

1. A rotation seal-cooling structure, comprising:
a cylindrical body including a double structure portion having a space open to an outside in a direction toward one end side from the other end side, on an outer peripheral edge portion of the one end side, and configured to rotate around a rotation axis;
a rotation seal including a sliding surface coming into contact with the double structure portion from an outer side in a radial direction of the cylindrical body and configured to rotatably seal a portion between the cylindrical body and the sliding surface; and
a nozzle configured to inject a cooling fluid to the double structure portion.

2. The rotation seal-cooling structure according to Claim 1,
wherein the double structure portion is configured to guide the cooling fluid from the outer side in the radial direction toward an inner side in the radial direction.

3. The rotation seal-cooling structure according to Claim 1,
wherein a plurality of the nozzles are provided along a circumferential direction of the cylindrical body.

4. The rotation seal-cooling structure according to Claim 1,
wherein the cooling fluid is water, air, or a mixture of water and air.

5. The rotation seal-cooling structure according to Claim 1,
wherein the nozzle is a spray nozzle.

6. The rotation seal-cooling structure according to Claim 1,
wherein a plurality of flow passage walls that extend in the radial direction inside the double structure portion and partition the inside of the double structure portion in a circumferential direction of the cylindrical body are provided in the circumferential direction.

7. The rotation seal-cooling structure according to Claim 1,
wherein a plurality of fins that extend in a direction inclined with respect to the rotation axis are provided inside the double structure portion in a circumferential direction of the cylindrical body.

8. A heating device comprising:
the rotation seal-cooling structure according to any one of Claims 1 to 7,
wherein the heating device heats an object to be treated that is fed into the cylindrical body.

9. A rotation seal-cooling method, comprising:
by using a rotation seal-cooling structure including
a cylindrical body including a double structure portion having a space open to an outside in a direction toward one end side from the other end side, on an outer peripheral edge portion of the one end side, and configured to rotate around a rotation axis,
a rotation seal including a sliding surface coming into contact with the double structure portion from an outer side of the cylindrical body in a radial direction and configured to rotatably seal a portion between the cylindrical body and the sliding surface, and
a nozzle configured to inject a cooling fluid to the double structure portion,
injecting the cooling fluid from the nozzle to the double structure portion.

10. The rotation seal-cooling method according to Claim 9, further comprising:
guiding the injected cooling fluid from the outer side in the radial direction toward an inner side in the radial direction inside the double structure portion.
